Europäisches Patentamt

European Patent Office

Office européen des brevets

(11) Publication number: 0 387 630 A2

# EUROPEAN PATENT APPLICATION

(21) Application number: 90104075.8

(51) Int. Cl.5: G01N 21/78

(22) Date of filing: 02.03.90

(30) Priority: 13.03.89 US 324403

(43) Date of publication of application:
19.09.90 Bulletin 90/38

(84) Designated Contracting States:
DE FR GB IT

(71) Applicant: MILES INC.
1127 Myrtle Street
Elkhart,IN 46515(US)

(72) Inventor: Hurtle, Richard L.
23549 U.S. 33 East
Elkhart, Indiana 46515(US)
Inventor: Vavul, Thomas E.
10193 Parkwood Drive, Apt. Nr. 1
Cupertino, California 95014(US)

(74) Representative: Kirchner, Dietrich, Dr. et al
c/o BAYER AG Konzernverwaltung RP
Patentabteilung
D-5090 Leverkusen, Bayerwerk(DE)

(54) A compact semi-programmable device for reading reagent test strips and method relating thereto.

(57) A portable photoanalytical device takes a reflectance reading from a reagent test strip, compares the reading to an internal standard, and translates the reading to a concentration value using constant values stored within a RAM chip. The constant values are preprogrammed for a particular lot of reagent test strips. A battery maintains the information stored in the RAM. The control values are initially downloaded into the RAM via an external connector. The concentration values are accumulated in the RAM, and periodically dumped out of the device through the external connector. The integrity of the information stored in the RAM is monitored by computing a checksum. Preferably the device includes a battery-backed real-time clock providing the date and hour of each reading. The device can also be operated by an external computer for test purposes.

EP 0 387 630 A2

FIG. 4

# A COMPACT SEMI-PROGRAMMABLE DEVICE FOR READING REAGENT TEST STRIPS AND METHOD RELATING THERETO

## BACKGROUND OF THE INVENTION

### A. Field Of The Invention

The present invention relates generally to a compact photoanalytical device for use in reading reagent test strips. More specifically, the photoanalytical device of this invention can be used by medical technicians or diabetics for automatically reading test strips that indicate blood glucose concentration by a change in color.

### B. Description Of The Related Art

Patients suffering from diabetes mellitus require periodic doses of insulin to maintain their blood glucose concentration within safe limits. The required dosage for any given patient is influenced by a number of environmental variables such as stress, exercise and dietary intake. Therefore, it is necessary for the blood glucose concentrations of patients to be closely monitored to periodically adjust the dosage of insulin.

In many cases the patient's blood glucose concentration must be measured multiple times a day. For this purpose, techniques and instruments have been devised that enable the patient to make the measurements at home. In the typical case the patient records the measurements for periodic review by the physician during scheduled office visits, and the patient may seek the immediate aid of the physician if the measurements are abnormal. In some cases the patient is instructed to adjust the insulin dosage based on the measurements.

An especially simple and reliable diagnostic or test procedure is required if the procedure is to be performed by the patient at home, without the assistance of a physician or experienced technician. Such procedures may use reagent test strips that change color in the presence of a specific chemical substance such as blood glucose. In addition the intensity of the color change must be a predetermined function of the concentration of the chemical substance in order to provide a quantitative measurement. The concentration of the chemical substance can then be estimated by comparing the color of the test strip to a color chart that has been calibrated in terms of concentration.

In a conventional procedure for blood glucose measurement, the patient pricks his or her finger with a lance and obtains a drop of blood. The blood is placed on a reagent test strip sensitive to blood glucose. After forty seconds, the strip is wiped with an absorbent tissue to remove excess blood. Twenty seconds later the color of the strip is compared to the calibrated color chart.

The use of a color chart requires the patient to make an evaluation or estimate. To enable the physician to monitor the patient's condition, the patient must record his or her estimate of the blood glucose concentration, along with the date and time that the measurement was taken. The patient's estimation, however, is subject to errors of judgment, and the recording of data is also subject to errors. To eliminate these errors a hand-held instrument has been devised for sensing the reflectance of a test strip at the proper time, converting the reflectance to blood glucose concentration, and recording the blood glucose concentration.

A hand-held instrument for measuring and recording blood glucose concentrations from reagent test strips is disclosed in Allen, III, U.S. Patent 4,731,726 issued March 15, 1988. The instrument includes a reflectance photometer having a light emitting diode and a phototransistor, and a microcomputer for performing the measurement by operating the reflectance photometer, converting reflectance to glucose concentration, and recording the glucose concentration and other data. The microcomputer includes a keyboard for receiving data from the patient and a display for displaying commands and blood glucose concentrations. The microcomputer also has a timer and an audio output unit to provide "beep" signals to the patient. The patient, for example, activates a key on the keyboard to signal the start of a sixty-second test interval, and the timer and audio output unit provide a "beep" signal after forty seconds so that the patient wipes the test strip at that time and then places the test strip in the optical reflectometer. At the end of the sixty-second test interval, the microcomputer obtains a reflectance reading from the reflectometer by operating an analog-to-digital converter.

Allen says that his monitor system can be used with a communications modem to communicate with a physician's base station over a telephone line. (Col. 6, lines 28 et seq.) The physician's computer implements an algorithm for evaluating glucose and patient data from the monitor system, and the patient's insulin prescription may be adjusted in response to the evaluation and transmitted to the monitor via the modem link. The monitor, operating independently of the modem link is said to allow a patient to use and evaluate glucose, insulin and behavioral data on a daily basis. Accumulated patient data is communicated to the physician's computer through the modem link and the computer evaluates the data to produce a patient report. The physician interprets the report results and depending on his or her analysis, may revise assessment parameters, dietary and/or insulin prescriptions. The physician may then reprogram the monitor system by changing the assessment parameters or dietary, insulin, or other prescription stored within the monitor. It is said that this can be done by data inputs applied to the monitor directly at the physician base station or remotely over the modem channel.

Allen says that his glucose reflectance photometer can distinguish a large number of color shades. (Col. 8, lines 23 et seq.). Each shade of blue or other color corresponds to a certain blood sugar level. The monitor can be programmed so that other types of reagent strips can be used. Allen says that in such a case an adjustment in the A/D converter control software would also be required to provide correct conversion values.

A hand-held blood glucose meter including a microcomputer and an optical reflectometer for reading reagent test strips has been manufactured and sold by Miles, Inc., Diagnostics Division, Elkhart, Indiana 46515. The Miles blood glucose meter has an internal clock and calendar that automatically keep track of testing times. The stored results include date, time and glucose values. Visual warnings are provided for low battery, high and low glucose readings, and internal errors. A capacitor ensures that the memory retains data for at least eight hours even when the battery is removed for replacement.

## SUMMARY OF THE INVENTION

The present invention specifically pertains to a control means and method for adapting a portable photoanalytical device to particular reagent test strips, operators and users, and documenting the calibration and performance of the device. Briefly, in accordance with the invention, the photoanalytical device includes a random access memory (RAM) chip that stores at least one constant that is downloaded through an external connector. A battery maintains the information within the RAM chip. The constant value is used by the device in a software program for translating reflectance readings into concentration values. A switching means is provided for initiating execution of the software program for taking a reflectance reading from a reagent test strip within the device and comparing the reflectance reading to an internal standard. The reading is translated to a concentration value using said constant value and said concentration value is stored within the RAM chip. The stored concentration value is then capable of being outputted through the external connector. The feasibility of such a device is ensured by further providing an internal data integrity (IDI) means for determining whether the information maintained within the RAM chip is erroneous and displaying an appropriate message in the event that the information is erroneous.

Preferably the reflectance readings are translated into concentration values using both downloaded constants, which are predetermined in accordance with the type of reagent test strips to be used, and an activity level that is determined for each lot of reagent test strips. Each bottle of test strips, for example, is marked with the activity level. The portable photoanalytical device is provided with a keyboard to enable the operator to enter or change the activity level.

To minimize erroneous entry of the activity level, the operator is required to enter it only once and that activity level is stored in the RAM. During subsequent times that the device is turned on, the previously stored activity level is displayed and the operator may change it when necessary to match the activity level of a new bottle of test strips. Only a small number of possible activity levels is needed due to the use of appropriately selected downloaded constant values for translation of reflectance to concentration. The IDI means therefore ensures both the validity of the downloaded constant values and the previously entered activity level, and in particular can be used to prevent a reading from being taken in the event of erroneous RAM information unless the constant values are corrected by subsequent downloading and a new activity level is entered by the operator via the keyboard.

In accordance with another feature of the invention, the photoanalytical device includes a battery-backed real time clock and a microprocessor. The microprocessor is programmed to read the real time

4

clock and provide an alarm clock function for ensuring that the required steps are performed at the required times for each reading. The microprocessor can also be programmed to keep track of a calibration or treatment schedule and to indicate that an appropriate reading was not taken at an appropriate time.

In accordance with still another feature of the invention, the microprocessor is programmed to provide a setup and manufacturing test mode in which constants and control limits can be set and verified by an external computer, and in which the external computer can operate and test the device and read internal values such as battery voltage and dark and reference levels.

## BRIEF DESCRIPTION OF THE DRAWINGS

Other features and advantages of the invention will become apparent upon reading the following detailed description and upon reference to the drawings in which:

FIG. 1 is a pictorial view of a hand-held photoanalytical device incorporating the present invention and illustrates its display, keyboard and test chamber;

FIG. 2 is a plan view of the display showing all display elements and legends;

FIG. 3 is a detailed view of the keyboard and illustrates the legends for the various keys;

FIG. 4 is a system-level schematic diagram illustrating the electronic components of the photoanalytical device of FIG. 1;

FIG. 5 is a detailed schematic diagram of the electronic components which assure the integrity of information stored in a random access memory;

FIG. 6 is a graph illustrating the operation of a dual slope analog-to-digital converter used in the photoanalytical device of FIG. 1;

FIG. 7 is a detailed schematic diagram of the electrical components in the dual slope analog-to-digital converter;

FIG. 8 is a detailed schematic diagram of a low power serial interface used for downloading information through an external connector into random access memory;

FIG. 9 is a hierarchical diagram of top-level software modules which are executed by a microcontroller in the photoanalytical device of FIG. 1 during downloading of control information, during testing and operation of the device, and during the retrieval of concentration values and other data accumulated in the random access memory;

FIG. 10 is a hierarchical diagram of the software modules for various operating sequences;

FIGS. 11A and 11b show a flowchart which illustrates the operation of the photoanalytical device of FIG. 1;

FIG. 12 illustrates flowchart steps which could be used for activating an alarm to remind an operator to take a reading according to a prestored calibration or treatment schedule;

FIG. 13 shows flowchart steps that could be used for determining the next time that a reading should be taken according to the prestored schedule; and

FIG. 14 shows flowchart steps that could be used to indicate that appropriate readings have not been taken at appropriate times in accordance with the prestored schedule.

While the invention is susceptible to various modifications and alternative forms, a specific embodiment thereof has been shown by way of example in the drawings and will herein be described in detail. It should be understood, however, that it is not intended to limit the invention to the particular form disclosed, but on the contrary, the intention is to cover all modifications, equivalents, and alternatives falling within the spirit and scope of the invention as defined by the appended claims.

## DETAILED DESCRIPTION OF THE PREFERRED EMBODIMENT

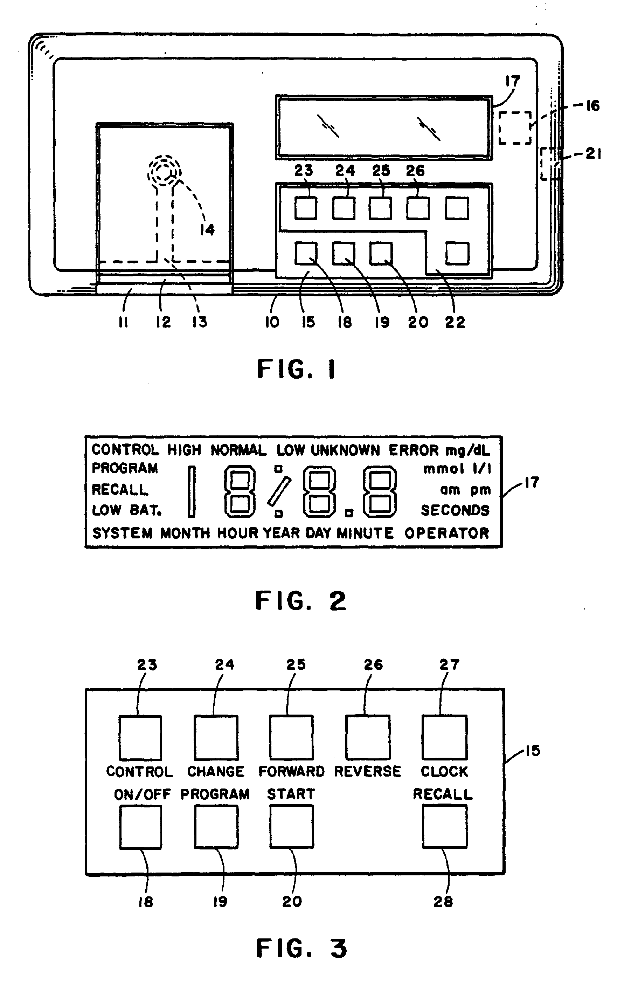

Turning now to the drawings, there is shown in FIG. 1 a hand-held photoanalytical device generally designated 10 which incorporates the present invention. The instrument 10 takes optical readings of reagent test strips of the kind which indicate the concentration of a substance such as blood glucose by a change in the reflectance of the strip.

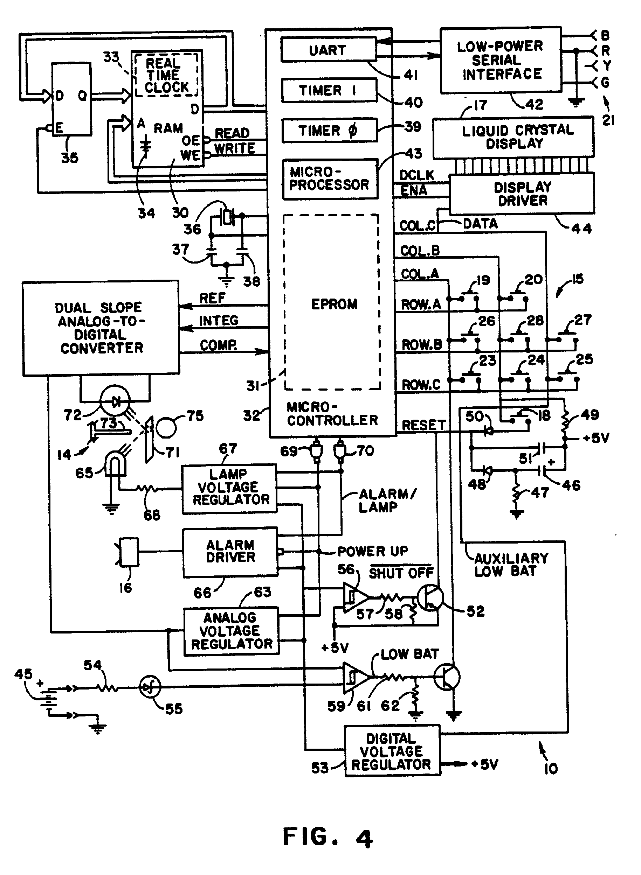

To read the reflectance of a test strip (71 in FIG. 4), the instrument 10 has a test chamber generally designated 11 underneath a cover 12. After raising the cover, the test strip is inserted into a guide 13 that aligns an end portion of the strip with an optical reflectometer generally designated 14. The reflectometer takes a reflectance reading of the strip and the reading is compared to an internal standard obtained by measuring a "dark level" and a "reference level" as will be further described below. By this comparison process the reflectance reading is normalized to a reflectance of between 0 and 100 percent.

In order to convert the normalized reflectance to concentration, it is necessary to employ a calibration procedure that takes into account the specific characteristics of the reagent test strip. In particular the normalized reflectance of a test strip is not a linear function of concentration. Moreover, the sensitivity of a test strip to concentration is a function of the particular lot or bottle from which the test strip is obtained. Therefore, it is necessary to employ preprogrammed constants for translating the normalized reflectance to concentration, and it is also necessary to employ an "activity" value for the particular lot or bottle from which the test strip is obtained. Bottles of test strips, for example, are commercially available from a number of manufacturers and each bottle is labeled with an activity value.

In order to initiate the taking of a reflectance reading from a test strip, the instrument 10 includes a keyboard generally designated 15. The instrument 10 further includes a buzzer 16 and a display generally designated 17 for guiding the operator through a test procedure and displaying the concentration value that is obtained for the test strip. In particular, the keyboard 15 includes an on/off button 18 for turning the device 10 on and off. The keyboard also includes a "program" button 19 for selecting the activity level associated with the particular test strip. To initiate the taking of a reflectance reading, the keyboard also has a "start" button 20.

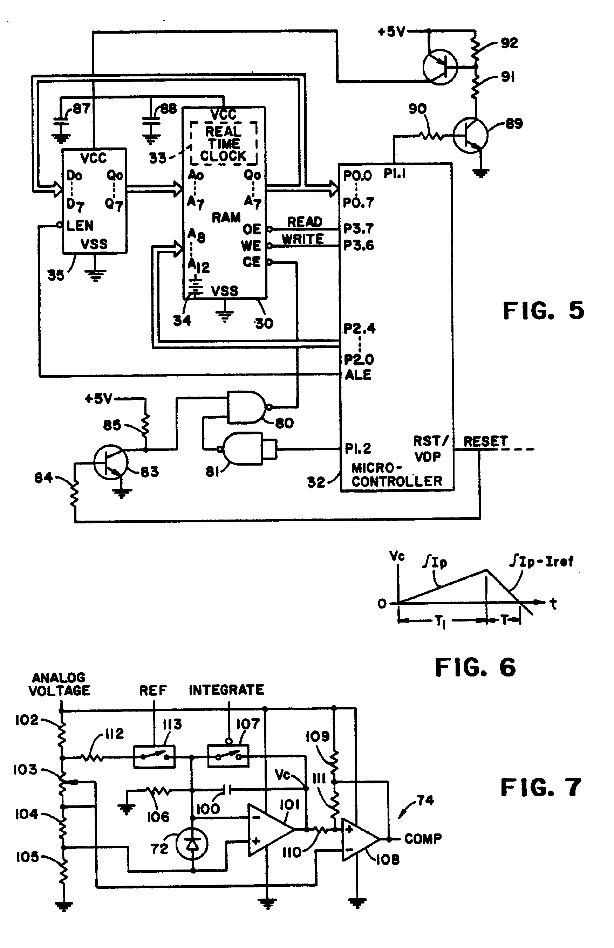

In accordance with an important aspect of the present invention, the instrument 10 has an external connector 21 for downloading and uploading control information from an external computer (not shown) to a random access memory (30 in FIG. 4) inside the instrument 10. As further described below in connection with FIG. 5, the random access memory is backed-up with a battery thereby allowing perpetual memory storage within the random access memory for the duration of the life of the battery. Preferably a lithium or similar-type battery is used that will last at least ten years before it need be replaced. In addition, the instrument 10 includes an internal data integrity (IDI) means for determining whether the information maintained within the random access memory is erroneous and for displaying an appropriate message on the display 17 in the event that the information is erroneous. Preferably this is done by computing a check sum of all the information in the random access memory whenever that information is changed. The check sum itself is stored in the memory. At a later time the check sum is recomputed and the result tested to determine the internal data integrity. Therefore, by backing the random access memory with a long-life battery, and providing the internal data integrity means, the random access memory can be used to store control information that previously had been stored only in a nonvolatile memory such as a mask programmable or electrically programmable read only memory.

In accordance with another aspect of the present invention, the instrument 10 includes a real-time clock (33 in FIG. 4) that preferably is backed by the same long-life battery as the random access memory. The real-time clock then can be used for automatically recording the date and time when the device is used to take reflectance readings or is calibrated or reprogrammed.

In accordance with still another aspect of the present invention, the instrument 10 is programmed with procedures and operating sequences for initial programming and testing, and for taking reflectance readings and accumulating results in the random access memory. The accumulated results are periodically uploaded or dumped via the external connector 21 to an external computer or printer (not shown).

When the instrument 10 is used in accordance with the operating procedures, the operator interacts with the device via the keyboard 15 and the display 17. The device 10 can be programmed for operation by a medical technician to perform tests for a number of patients, or the device 10 can be programmed for the exclusive use of a single patient. In the former case, the device 10 is programmed to accumulate calibration data in the random access memory in order to provide a permanent record validating the measurements obtained with the device. In the latter case, the device 10 is programmed to accumulate the concentration values obtained for a particular patient in order to provide a permanent record of patient data for review by a physician to aid in diagnosis or treatment.

At present, it is believed that initially the present invention will be most advantageous for monitoring different operators regarding their ability to properly operate the instrument 10 and to provide a record of calibration data validating the measurements made with the instrument. In this case, the instrument is programmed to run control sequences and to accumulate the results of the control sequences in the random access memory.

To run a control sequence, the instrument 10 is first turned on by pressing the on/off switch 18. A program number appears on the display 17 and remains displayed until another button is pressed. The program number represents the procedure by which normalized reflectance of a test strip is converted to a concentration value. In other words, it represents an "activity level" for the strip. Therefore the instrument can read a number of different kinds of reagent strips.

The operator can chose the program number or "activity level" for the particular strip to be used by pressing the program button 19. A previously used program number, for example, is fetched from the random access memory and displayed. Each time the operator presses the program button, the program number will index to the next higher number. Once the displayed program number matches the program number identified with the reagent strip, the operator could perform a measurement as described above by pressing the start button 20. But to perform a control sequence, instead, the operator raises a protective cover 22 that normally overlays a series of buttons on the keyboard 15 that are not needed for obtaining patient data.

To initiate the control sequence, the operator presses a "control" button 23. At first the entire display lights up as shown in FIG. 2 thereby providing a test to determine whether the entire display is working properly. Thereafter, the control button can be released.

If the random access memory is full, an error message will then be displayed and the instrument will not take any further readings until data is transferred out of memory. Assuming the memory is not full, the display will show an operator identification number and identify it as such by displaying the "operator" legend. If the operator wishes to change this identification number, the operator can press a "change" button 24 and then a "forward" button 25 or a "reverse" button 26. If the forward button is pressed, the identification number is indexed up, and if the reverse button is pressed, the identification number is indexed down. Once the appropriate identification number is selected, the control button 23 is pressed.

The operator is then required to go through a test run. A standardized control fluid (not shown) must be placed on a reagent test strip (not shown) correlating to the program number or "activity level" previously selected. Once the control fluid is supplied the start button 20 is pressed, the buzzer 16 sounds, "60 seconds" is displayed, and a second-by-second countdown begins.

The buzzer sounds a higher, shorter note at 22 and 21 seconds and a longer, lower note at 20 seconds, whereupon the operator wipes the test strip and inserts it into the guide 13 of the test chamber 11. When the countdown reaches one second, the buzzer 21 sounds a series of five very short buzzes to indicate that if the test strip was not inserted and the door closed, it is too late and the test must be run again. At 0 seconds the reflectance of the test strip is read by the optical reflectometer 14.

If the result is within a specified range, the result is stored in the random access memory along with the date, time, and operator identification number. If the result is outside the specified range, a flashing error message is displayed. The operator must then start all over again until an acceptable result is obtained. The range of acceptable results is defined by upper and lower control limits that are programmed in the random access memory.

Each control reading is stored in the random access memory, and in this way, different operators can be monitored regarding their ability to properly operate the instrument. Furthermore, if the operator cannot operate the instrument, that person cannot proceed and take a test reading. Also, if the instrument is faulty, proper test reading is not possible and therefore the instrument cannot be used to take readings unless it is properly repaired.

In order to set the real time clock, the keyboard 15 has a "clock" button 27. By pressing the clock button, the year, month, day, hour and minute are indexed in sequence and each of these can be increased or deceased by pressing the forward or reverse buttons.

To review results that are accumulated in the random access memory, the keyboard 15 includes a "recall" button 28. By pressing the recall button, the system number, the number of empty data spaces left in the random access memory and the stored results are recalled in sequence.

Turning now to FIG. 4, there is a system level schematic of the electronic components in the instrument 10. The control sequences for the instrument are defined by control information in the random access memory 30 and in an electrically programmable read only memory 31. This control information includes instructions which are executed by a microcontroller 32. Preferably the microcontroller is a type 8051 microcontroller such as part number 85C154 manufactured by OKI. The electrically programmable read only memory 31 preferably is a part number 27C128 that is mounted in piggy back fashion over the microcontroller chip.

The random access memory preferably is a part number DS1243Y manufactured by Dallas Semiconductor, 4350 Beltwood Parkway South, Dallas, Texas 75244. This random access memory includes an 8K byte memory chip in a hybrid package that also includes a real time clock 33 and a lithium battery 34. The real time clock is accessed over the same address and data lines as the random access memory chip.

The type 8051 microcontroller 32 multiplexes the lower order 8 address bits over the data lines and therefore an address latch 35 such as part number 74HC373 is used in connection with the random access memory 30.

The microcontroller 32 executes instructions at a precise rate set by a quartz crystal 36 preferably having a frequency of 1.8432 megahertz. The crystal 36 operates in connection with two 15 picofarad capacitors 37 and 38. The frequency provided by the crystal clocks two timers in the microcontroller. The first timer, designated as "timer 0", provides a one-millisecond interrupt which is counted by an interrupt routine to provide a first number indicating milliseconds and a second number indicating seconds. These numbers are used for controlling timing for scanning the keyboard 15, flashing or displaying data on the display 17, sounding the buzzer 16, and for controlling the 60 second countdown for taking a reflectance reading.

The frequency of the quartz crystal 36 clocks a second timer 40 referred to as "timer 1" that sets the baud rate of a universal receiver-transmitter or UART 41. The UART is linked to the external connector 21 by a low-power serial interface 42. This serial interface preferably receives and transmits data through the connector 21 according to the standard RS232 protocol.

At the center of the microcontroller is a microprocessor 43 which executes instructions fetched from memory and has internal registers for the temporary storage of data and intermediate results.

For low power operation, the display 17 is preferably a liquid crystal display. As shown in FIG. 4, the display 17 is interfaced to the microcontroller via a display driver such as a Motorola MC145000 which has a serial input shift register.

For protecting the integrity of the data stored in the random access memory 30, the microcontroller 32 must be prevented from writing data to the RAM 30 when power is first supplied to the circuits or when power is removed. Power to the microcontroller is supplied, for example, by a 9 volt battery 45 including six size "AA" cells. When these cells are inserted or removed from the instrument, it is necessary to prevent the microcontroller from writing data to the random access memory 30. This is conveniently done by providing circuits which hold the microcontroller in its reset state during these conditions.

When the battery cells are first inserted, the microcontroller is reset by a circuit including an electrolytic capacitor 46, a resistor 47, and a directional diode 48. The capacitor, for example, has a value of 10 microfarads, and the resistor has a value of 8.2K ohms. It is also possible, though unlikely, that the microcontroller would need to be reset during some other time. To account for this possibility, the on/off push button switch 18 functions as a reset switch in connection with a resistor 49, a directional diode 50 and a capacitor 51. The resistor 49, for example, has a value of 4.3 K ohms, and the capacitor has a value of 0.1 microfarads.

To ensure the integrity of the data in the random access memory 30, it is also necessary to hold the microcontroller in its reset state whenever the voltage from the battery 45 drops to a level insufficient to power the microcontroller 32 with at least 5 volts. For this purpose the power supply circuits activate a transistor 52 to supply a reset signal in this case. Therefore, the instrument stops functioning and consequently the operator is forced to replace the battery 45.

The power supply circuits include a voltage regulator 53 such as part number MAX666 which provides 5 volts to the microcontroller and its associated digital circuits. The power supply circuits also include a current limiting resistor 54, for example 1 ohm, and a Schottky diode 55 to ensure against improper battery polarity.

To provide the shut off signal in the event of a low battery voltage, a Schmitt trigger comparator 56 compares the battery voltage to a relatively constant reference voltage such as the output of the voltage regulator 53 to provide a shut off signal active low when the battery voltage drops below about 5.5 volts. In this case, the comparator 56 turns the transistor 52 on through a current limiting resistor 57 and a shunt resistor 58, for example, both 100 K ohms.

In order to prevent the microcontroller from being shut off during use due to a low battery, the display 17 (see FIG. 2) has a "low bat." indicator to give the operator advanced warning of a low battery. This condition is detected by a second Schmitt comparator 59, a transistor 60, and resistors 61 and 62, for example, both 100 K ohms. The comparator 59 compares the battery voltage to the relatively constant output of an analog voltage regulator 63. The Schmitt trigger 59, for example, provides a low battery signal whenever the battery voltage drops to about 6.3 volts. An auxiliary low battery signal is provided by the part number MAX666 voltage regulator 53. And as an added precaution the microcontroller 32 can sense the auxiliary low battery signal as well as the low battery signal from the comparator 59.

The circuits shown in FIG. 4 draw a maximum amount of current when the buzzer or alarm 16 is activated and when a lamp 65 is turned on to take a reflectance reading. The buzzer 16 can operate over a wide voltage range and therefore the battery voltage 45 is selectively applied to the buzzer 16 by an alarm driver 66 that functions as a controlled switch. The alarm driver 66, however, has gating inputs that prevent the buzzer from being turned on at the same time as the optical reflectometer 14.

Although the lamp 65 can also operate over a wide voltage range, it is necessary for the lamp to provide a relatively constant optical output and therefore its current is maintained relatively constant by a lamp voltage regulator 67 and a current limiting resistor 68, for example, 24 ohms. To ensure that both the buzzer and the lamp are shut off when the microcontroller is reset, the lamp voltage regulator and the alarm driver 66 are connected to the microcontroller through a pair of inverters 69 and 70.

To sense the reflectance of the test strip 71, reflected light from the lamp 65 is received by a photodiode 72. A barrier 73 prevents direct transmission of light from the lamp to the photodiode. A dual slope analog-to-digital converter 74 converts photocurrent from the diode to a digital signal providing the microcontroller with a numerical value of the light reflected by the strip 71. To normalize the measured reflectance, it is necessary to compare the reflectance of the strip 71 to the reflectance of a standard such as a mirror 75. The mirror 75 is mounted on the lower surface of the cover 12 of the test chamber (see FIG. 1) so that light is reflected from the lamp 65 to the photodiode 72 when the strip is absent from the test chamber and the cover is closed.

Turning now to FIG. 5 there is shown a detailed schematic diagram of the electronic circuits which enable and power the random access memory 30. These circuits prevent data from being written into the random access memory when the microcontroller is being reset and also selectively couple the power supply of the instrument to the battery 34 in the random access memory 30 in order to extend the life of the internal battery.

The random access memory 30 has a chip enable (CE) input which must be active in order the enable data to be written into the memory. A pair of gates 80, 81 disable the random access memory when the output P1.2 of the microcontroller 32 is high. This occurs when the microcontroller 32 is in its reset state. To disable the memory 30 when the microcontroller 32 is being reset, a transistor 83 senses the level of the reset signal applied to the microcontroller. The transistor 83 operates in connection with a series resistor 84 such as 3.3 megohms and a pull-up resistor 85 such as 1 megohm.

The internal battery 34 is connected to a VCC input of the random access memory 30. If the external supply voltage of +5 volts (from the regulator 53 in FIG. 4) is applied to the input VCC, however, the random access memory will draw current from the external supply rather than the internal battery 34. But it is desirable to connect the internal battery 34 to the external supply in such a way that the internal battery will not be discharged when the external supply loses its voltage due, for example, to the main battery (45 in FIG. 4) having a low voltage. For this purpose, the external supply of +5 volts is connected through a transistor 86 to the input VCC of the random access memory 30. It is also desirable to wire the power supply VCC of the latch 35 in parallel with the input VCC of the random access memory 30 to ensure the stability of the address inputs to the random access memory. Standard supply decoupling capacitors 87 and 88, such as 0.1 microfarads, are also connected to each of the power supply inputs VCC.

For testing the internal battery 34, the microcontroller 32 can disconnect the external supply from the random access memory 30. For this purpose an output P1.1 of microcontroller 32 turns the transistor 86 on and off. Since the output P1.1 is set high when the microcontroller 32 is reset, it is desirable to connect the output P1.1 to the transistor 86 through another transistor 89 and resistors 90, 91 and 92. The resistors 90 to 92 have, for example, values of 1 megohms, 33 K ohms and 120 K ohms, respectively.

Turning now to FIG. 6 there is shown a graph illustrating the operation of the dual slope analog-to-digital converter. As is well known, such a converter functions by integrating a current $I_s$ from a zero reference level for a fixed time $T_1$ and then integrating the difference between the current $I_s$ and a reference current $I_{ref}$. Preferably the reference current $I_{ref}$ is selected to be about twice the maximum expected current $I_p$. Therefore, after a certain time T which is usually less than half the preselected time $T_1$, the integrated value will fall below the zero reference value. The time T required for the integrated value to fall below the zero reference value is an indication or measure of the value $I_p$. In particular, the ratio of $I_p$ to the reference current $I_{ref}$ can be calculated according to:

$$I_s = \frac{I_p}{I_{ref}} = \frac{T}{T + T_1} \qquad\qquad (Equation\ 1)$$

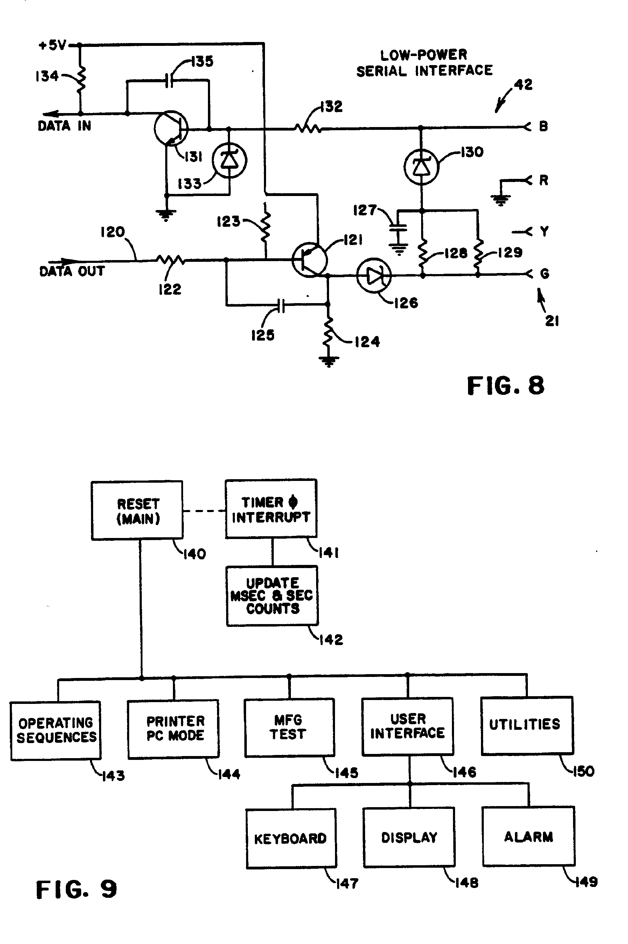

Turning now to FIG. 7, there is shown a detailed schematic diagram of a dual slope analog-to-digital converter 74 that can be operated by the microcontroller 32 to perform the conversion procedure of FIG. 6. The current $I_p$ from the photodiode 72 is integrated by an integrator comprising a capacitor 100 and an operational amplifier 101. The capacitor 100, for example, has a value of 0.022 microfarads, and the operational amplifier 101 is a part number CA3160L. The inputs to the operational amplifier 101 are biased by a voltage divider network including resistors 102, 103, 104 and 105 which have values, for example, of 13 K ohms, 2.5 K ohms, 160 ohms and 1 K ohms.

The photodiode 72 is biased by a resistor 106, for example 200 megohms, to obtain a linear response and to measure the so-called "dark current" from the photodiode 72 in the absence of light being received by the photodiode. Therefore, the response of the photodiode 72 can be integrated in FIG. 6 for illumination ranging from zero to the maximum value provided by the lamp (65 in FIG. 4) and the measured value of the "dark current" can be subtracted from the result to provide an accurate indication of the level of illumination received by the photodiode.

To integrate the current from the photodiode for the preselected time $T_1$, the voltage $V_c$ on the capacitor 100 must initially be less than the zero reference level of FIG. 6. For this purpose the converter 74 includes an analog switching means 107 such as an insulated gate field-effect transistor or transmission gate. A suitable field-effect transistor is part number M116.

The switching means 106 is controlled by an INTEGRATE signal from the microcontroller. After initially discharging capacitor 100, the microcontroller opens the switch 107 for integrating the current from the photodiode 72 for the preselected time $T_1$. The microcontroller 32 keeps the switching means 107 open for the time $T_1$ after the voltage $V_c$ exceeds the zero reference level.

A comparator 108, such as part number 2903, senses whether the voltage $V_c$ exceeds the zero reference level. The comparator works in connection with a pull-up resistor 109 such as 100 K ohms, and an input resistor 110 and a feedback resistor 111 that provide some hysteresis. The resistors 110 and 111, for example, have values of 1 K ohms and 1 megohms. The output of the comparator 108 is fed back to the microcontroller so that the microcontroller may start measuring the preselected time $T_1$ when the comparator output signal (COMP.) assumes a low value.

During the preselected time $T_1$ the microcontroller 32 repeatedly executes a program loop 102,400 times to determine the expiration of the time $T_1$. Then the microcontroller sends a REF. signal to the converter 74 to begin integrating the difference between the current $I_p$ from the photodiode 72 and the reference current $I_{ref}$. The reference current is obtained from a resistor 112 such as 10 megohms when analog switching means 113 is closed in response to the REF. signal. The analog switching means 113, for example, is an insulated gate field-effect transistor such as part number M116.

The microcontroller 32 then measures the time T by incrementing a counter during each cycle of the above-mentioned loop until the comparator signal (COMP.) assumes a high logical value. At that time the value of T is indicated by the value of the counter.

To normalize the reflectance of the test strip (71 in FIG. 4), the reflectance of the strip, as indicated by the ratio of $I_p$ to $I_{ref}$, is compared to an internal standard defined by the so-called "dark current" of the photodiode 72 and a "full scale" current obtained when light from the lamp 65 is reflected from the mirror 75 to the photodiode in the absence of the strip 71 (see FIG. 4). Preferably this comparison or normalization is done according to the following equation:

$$R = R_{fs} \frac{I_s - I_{os}}{I_{fs} - I_{os}} \qquad \text{(Equation 2)}$$

$I_s$ is the current ratio defined by Equation 1 above for the reflectance of the strip 71. The value $I_{fs}$ is the ratio of Equation 1 obtained when the mirror 75 is used in lieu of the strip 71 and indicates the reflectance of the mirror. The value $I_{os}$ is the ratio from Equation 1 obtained when the lamp 65 is turned off. In other words, the value $I_{os}$ is the ratio of the so-called "dark current" of the photodiode 72 to the reference current $I_{ref}$. The constant $R_{fs}$ is the normalized reflectance of the mirror 75 and has a value, for example, of about 90%.

Preferably the values of $I_{os}$ and $I_{fs}$ are measured each time that a 60 second count down occurs and a reflectance reading is taken for the test strip 71. The dark and full scale currents are measured and the ratios $I_{os}$ and $I_{fs}$ are calculated, for example, just prior to the time that the operator is signaled to insert the test strip 71 into the test chamber (11 in FIG. 1).

The consistency of the values used in the normalization procedure are checked by applying predetermined control limits to the measured time T during the analog-to-digital conversion process. When measuring the dark current, the time $T_1$ must fall within a range of 0 to 9,278 counts. When measuring the full scale current indicating the reflectance of the mirror 75, the time T1 must fall within a range of about 29,142 to 230,400 counts. When reading the reflectance of the test strip, the time $T_1$ must fall within a range from the count obtained when measuring the dark current and 230,400 counts.

Once the reflectance of the test strip 71 has been normalized, it is necessary to convert or translate the normalized reflectance to a concentration value using constant values stored in a random access memory and using a program number or activity level for the particular test strip. It is desirable to perform such a translation using a piece-wise linear or polynomial equation so as to minimize the required number of stored constants and to use conventional algebraic subroutines for performing the computations. Also, it is desirable for the conversion or translation to be done in such a fashion that a small number of activity levels can be used to characterize the test strips.

For measuring blood glucose concentration, the following conversion formula is preferred for enabling the test strips to be characterized by 8 activity levels, designated by a program number P ranging from 1 to 8:

$$F = A + B*R + C*R^2 \qquad \text{(Equation 3)}$$
$$E = E0 + (P - 1)*E1$$
$$D = D0 + E*D1$$
$$\text{IF } R > E$$
$$\qquad \text{THEN } G = G0 + F*G1$$
$$\qquad \text{ELSE } G = G0 + (F + D*(E - R)^2)*G1$$

G is the blood glucose concentration, and A, B, C, D0, D1, E0, E1, G0 and G1 are predetermined constants selected to "fit" the above equation to empirical data obtained by measuring the reflectance of a statistically representative sample or group of strips with standardized control solutions.

Equation 3 above should be recognized as a kind of "single point" calibration procedure that recognizes that for relatively high values of normalized reflectance, the concentration G is a quadratic function of the normalized reflectance R. But when the concentration G is less than the value E, however, the concentration G deviates from the quadratic function in a "square law" fashion by an amount proportional to the constant D.

Once the concentration is computed, it is compared to certain control limits before being displayed to the operator. For blood glucose concentration, for example, any concentration value greater than 2,000 mg/dL is considered erroneous and values at or above this limit are indicated by displaying "error". The instrument 10 also has a range over which the concentrations values are considered sufficiently accurate to be displayed and recorded. The upper limit for accurate glucose concentration values is, for example, 501 mg/dL, and the lower limit, for example, is 20 mg/dL. Readings at or above the upper limit are indicated by displaying "HI" and are recorded as 501 mg/dL. Readings below the lower limit are indicated by displaying "LO" and are recorded as 29 mg/dL.

Turning now to FIG. 8 there is shown a detailed schematic diagram of the low-power serial interface 42 used for connecting the microcontroller 32 to the external connector 21 for communication with an external computer or printer (not shown). The connector 21 preferably is a standard telephone jack for connection to black, red, yellow and green (B, R, Y and G) lines as shown.

For transmitting data from the microcomputer, serial data from the universal receiver-transmitter 41 (see FIG. 4) are received on a line 120 and fed through a driver including a transistor 121, a series resistor 122, a shunt resistor 123, a load resistor 124 and a feedback capacitor 125 which prevents the interface from generating radio frequency interference. The resistors 122, 123, and 124, for example, have values of 8.2 K ohms, 100 K ohms and 100 K ohms, respectively. The capacitor 125 has a value, for example, of 100 picofarads. The collector of the transistor 121 is connected to the green line G through a first Schottky diode 126. The green line G is also connected to a shunt network including a capacitor 127, to resistors 128 and 129, and a second Schottky diode 130.

The first Schottky diode 126 isolates the driver transistor 121 from the impedance network in the absence of the connector 21 being connected to an external computer. Therefore, unless the interface is actually being used to transmit data, it consumes very little power. The capacitor 127 has a value, for example, of 0.1 microfarads, and the resistors 128 and 129 each have a value of, for example, 3.0 K ohms.

To receive data, there is provided a level-shifting transistor 131 that is connected to the black line through a series resistor 132. The resistor 132 has a value, for example, of 33 K ohms. A Schottky diode 133 shunts the base and the emitter of the transistor 131 so as to present a more linear impedance to the black line. The transistor 131 operates in connection with a load resistor 134, for example 4.3 K ohms, and a capacitor 135, such as 100 picofarads, that limit the frequency response of the transistor 131 so as to reject high frequency noise or interference.

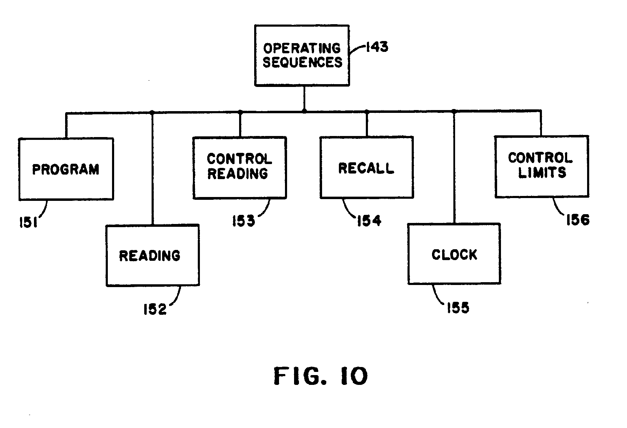

Turning now to FIG. 9 there is shown a hierarchical diagram of various software modules which are included in the electrically programmable read only memory (31 in FIG. 4) and which define various control procedures that are executed by the microcontroller (32 in FIG. 4) for controlling the photoanalytical device (10 in FIG. 1). At any given time, the microcontroller is either executing an interrupt routine at one millisecond intervals in response to the timer 0 (39 in FIG. 4), or is executing a main program beginning at a certain reset address whenever the reset signal is applied to the microcontroller (see FIG. 4). The software modules therefore include a top-level module 140 called "MAIN" executed in response to the reset signal, and an interrupt routine 141 responsive to the timer 0 interrupt. The interrupt routine includes a module 142 for updating memory locations including a millisecond count and a second count as was described above in connection with FIG. 4.

The main program module 140 is supported by a number of other modules including operating sequences 143 that are further described below in connection with FIG. 10.

A module 144 is used for sending data to a printer or exchanging data with an external computer via the external connector 21 (see FIG. 1). When the photoanalytical device is connected to an external computer, the external computer may program and test the photoanalytical device and obtain results having been accumulated in the random access memory in the device. In particular a manufacturing test module 145 controls the instrument during programming and testing by the manufacturer prior to shipment of the instrument to the customer.

A user interface module 146 includes control procedures for communicating with the operator of the photoanalytical device. The software modules, for example, include a module 147 for scanning the keyboard (15 in FIG. 1), a module 148 for operating the display (17 in FIG. 1), and a module 149 for activating the buzzer or alarm (16 in FIG. 1).

The software modules also include a set of utilities 150 such as subroutines for performing addition, subtraction, multiplication, division, and other numerical operations.

Turning now to FIG. 10 there is shown a hierarchical diagram of software modules which define the operating sequences. The operating sequences are initiated in response to the operator's selection of a control key on the keyboard. (15 in FIG. 1). A program module 151 defines the procedure for setting the program number or activity level in response to the program button (19 in FIG. 3). A reading module 152 defines the countdown procedure that is initiated by the start button (20 in FIG. 3). A control reading module 153 defines the procedure for testing the instrument using a standardized control solution, as initiated by the control button (23 in FIG. 3). A recall module 154 defines the procedure for inspecting results accumulated in the random access memory in response to the recall button 28. Moreover, a clock module 155 is provided for setting the real time clock in response to the clock button (27 in FIG. 3).

It may also be desirable to permit the operator to change the control limits for the photoanalytical device (10 in FIG. 1). For this purpose there is provided a control limits module 156. The procedure defined by the control limits module is initiated by simultaneously pressing the control button (23 in FIG. 3) and the program button (19 in FIG. 3).

Further details of the software modules are disclosed in the code listing of APPENDIX I.

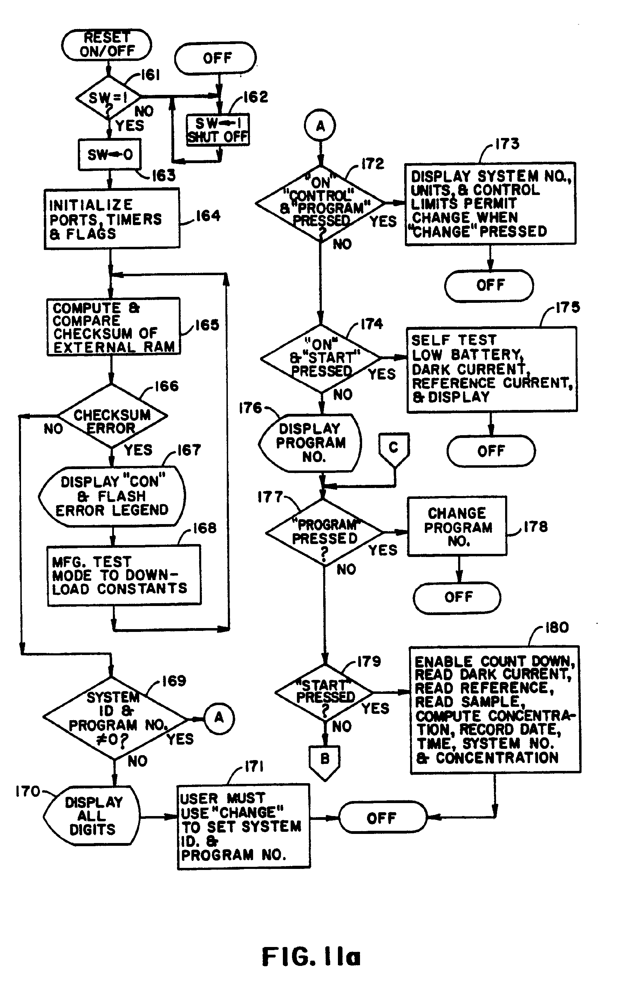

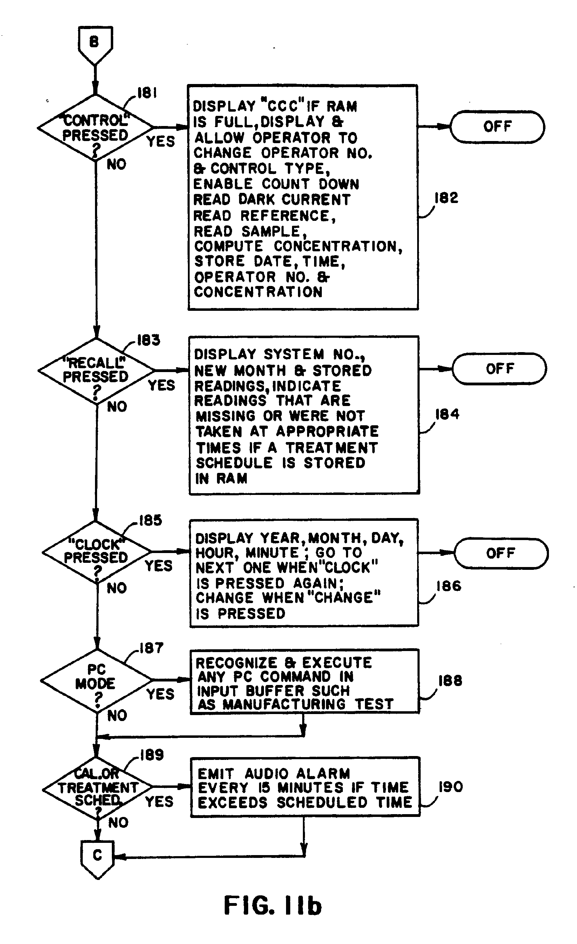

Turning now to FIGS. 11A and 11B there is shown a flowchart which summarizes the control procedures in the software modules of APPENDIX I, beginning with the main program. Since the on/off switch also functions as a reset switch, a flag SW is used to indicate whether the instrument is to be turned on or off in response to the reset signal. The flag is tested in the first step 161. If the flag is a logical zero, then in step 162 the flag is set to a logical 1 and the photoanalytical device is shut off. Therefore, the next time that the on/off switch is pressed, step 161 will find that the flag SW is set to a logical 1 and the instrument will become turned on. Then in step 163 the logical flag SW is set to a logical zero so that if the operator again presses the on/off switch the instrument will turn off.

To turn the instrument on, the ports, timers and flags associated with the microcontroller are initialized in step 164. Next, in step 165, a check sum of the random access memory (30 in FIG. 4) is computed and compared to determine whether any of the control information in the memory is erroneous. Execution branches in step 166 depending upon whether a check sum error was detected.

In the event of a check sum error, it is necessary for the random access memory to be loaded with the control constants that are used, for example, in Equations 2 and 3 above. These constants are obtained in step 168 by entering the manufacturing test mode as defined by the manufacturing test module.

The manufacturing test mode is entered by attaching an external computer to the instrument via the external connector (21 in FIG. 1). The external computer accesses the instrument by first entering a "personal computer mode" in which the instrument recognizes certain control codes. The control code "A" uploads all control test results having been accumulated in the random access memory and transmits these results to the external computer. The control code "C" uploads only the test results made in the current month, and the control mode "L" uploads only the test results for the previous month. The control code "R" sets the control limits and the code "r" reads or uploads the control limits. The control code "S" sets a system number which identifies the particular instrument, and the code "s" reads or uploads the system number. The control code "T" sets date and time in the real time clock, and the code "t" reads or uploads the date and time. The control code "M" enters the manufacturing test mode. The code "Q" exits the personal computer mode. ·

In the manufacturing test mode the external computer can download constants into the random access memory. The external computer transmits the constants and a password after the control code "C". The external computer can also operate the instrument to obtain test readings and test the battery condition, the display, keyboard, memory, the crystal frequency, and the buzzer.

In response to the control code "A", the analog circuits are powered up by activation of the "POWER UP" signal in FIG. 4. The battery condition is read or uploaded in response to a control code "B". All of the elements of the display are turned on and off in response to the control code "D".

A keyboard test is initiated in response to the control code "K". In the keyboard test, the buttons on the keyboard must be pressed sequentially and in response the respective digits 1 to 8 are uploaded as corresponding switches are closed.

A memory test is performed in response to the control code "M". The reflectometer in the instrument is tested by first transmitting a control code "R" to perform a dark and reference test, and then transmitting a control code "U" to perform a sample reading.

The real time clock is set by transmitting a control code "S", and the time may be read back by transmitting control code "T". In response to a control code "W", a square wave of approximately 1.371 kilohertz is transmitted on the column B output pin of the microcontroller to provide a test of the crystal frequency. In response to the control code "Z", the buzzer is activated for test purposes. The manufacturing test mode is terminated by the control code "Q".

Returning now to the flowchart in FIG. 11A, once the manufacturing test mode has downloaded the constants, the random access memory should include proper control information including a proper check sum. Therefore, when execution branches back to steps 165 and 166, there should not be a check sum error. Execution then branches to step 169 to test whether the system identification number and the program number are both not equal to zero.

The system id and the program number are both set to zero during the manufacturing test mode when the constants are loaded. Therefore, initially execution will branch to a step 170 in which the display is first tested by displaying all digits and legends. Then in step 171 the operator must press the "change" button to set the system identification number and program number to non-zero values. The user exits the "change" mode by pushing the on/off button which causes execution to jump back to the initial step 161 and execution should continue back down to step 169 whereupon the microcontroller should find that the system id and the program number now have non-zero values. Therefore execution branches via the on-page connector A to step 172.

In step 172 the microcontroller checks whether the operator is requesting a "change limits" mode by pressing simultaneously the control and program buttons when the on/off button is pressed and released to turn the unit on. The system number, units and control limits are successively displayed in step 173. This control information can be changed by pressing the "change" button and then pressing the forward or reverse buttons to increment or decrement the displayed value. The control limits mode is terminated by pressing the on/off button.

In step 174 the microcontroller checks whether the "start" button was pressed when the on/off button was pressed and released. If so, the microcontroller executes a "self test" mode. In step 175 the microcontroller checks for a low battery condition, checks the dark current value, checks the reference current value, and also turns all of the display elements on and off. The self test mode is terminated by pressing the on/off button.

In step 176 execution reaches a point of typical operation by displaying a previously entered program number and waiting for the operator to press either the program, start, control, recall or clock buttons. The instrument would also respond to any commands from an external computer connected via the external connector by entering the personal computer mode. Also, as further described below, the microcontroller could be programmed to function as an alarm clock to remind the operator that a calibration or test reading should be taken.

If the program button is pressed, as detected in step 177, then the operator may change the program number in step 178.

In step 179 the microcontroller checks whether the start button is pressed. If so, then in step 180 the 60-second count down sequence is initiated. The dark, reference and sample values are read, and the concentration is computed. If the instrument is issued to a patient, the date, time, system number and concentration are recorded in the random access memory for review by a physician at a later time.

Continuing now in FIG. 11B, in step 181 the microcontroller checks whether the control button was pressed. If so, then in step 182 the message "CCC" is displayed if the random access memory is full. In this case the results having been recorded in the memory must be dumped or uploaded before the control sequence can proceed further. Otherwise there is sufficient memory to continue the control sequence. The operator number and control type are displayed and the operator may change them. Otherwise, the operator may press the "start" button to initiate a 60-second count down. The dark and reference currents are read and the reflectance of the sample is read. The concentration is computed and the date, time, operator number and concentration are recorded in the random access memory.

In step 183 the microcontroller checks whether the recall button was pressed. If so, then in step 184 data is recalled from the random access memory and displayed. The system number, new month and stored readings are displayed. Also, if a calibration or treatment schedule is stored in the random access memory, readings that are missing or not taken at appropriate times are indicated, for example, by activating the buzzer and flashing the display of the inappropriate or late results.

In step 185 the microcontroller checks whether the "clock" button is pressed. If so, then in step 185 the year, month, day, hour and minute are displayed in sequence as the clock button is pressed multiple times. A displayed value can be changed by pressing the change button and then the forward or reverse buttons to increase or decrease the displayed value.

In step 187 the microcontroller checks whether a byte of information has been received in the input buffer of the universal receiver-transmitter (41 in FIG. 4). If so, then in step 188 the microcontroller checks whether the byte is a control code for the personal computer mode, and any indicated command is executed, as described above.

The random access memory could store a calibration or treatment schedule, for example, in the form of a table of the times of the day in which a calibration or test reading should be taken. If there is such a schedule, then in step 189 the microcomputer obtains the next scheduled treatment time from the table and also obtains the current time from the real time clock. Then in step 190 the buzzer is activated periodically if the current time exceeds the scheduled time. To conserve the batteries, for example, a short buzz or series of buzzes is emitted at 15 minute intervals until the scheduled calibration or test is performed.

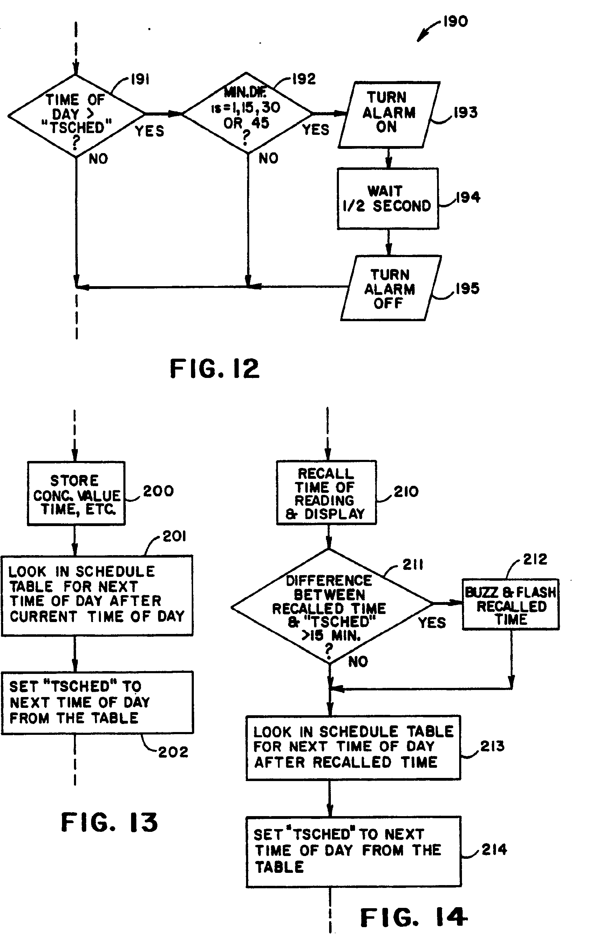

Turning now to FIG. 12 there are shown more detailed flowchart steps for operating the buzzer or alarm to tell the operator that a scheduled calibration or treatment has been missed. In step 191 the time of day from the real time clock is compared to the next scheduled time for calibration or treatment. If the time of day exceeds the scheduled time, then in step 192 the difference between the minutes of the time of day and the scheduled time is compared to 1, 15, 30 and 45. If the difference in the minutes is equal to 1, 15, 30 or 45 then in step 193 the alarm is turned on. In step 194 the microcontroller waits for half a second and then in step 195 the alarm is turned off.

Turning to FIG. 13 there are shown flowchart steps for obtaining the next scheduled calibration or treatment time. A new value for the scheduled time is obtained after a step 200 in which a reading is taken and the reading is recorded in the random access memory. Then, in step 201 the microcontroller looks in the schedule table for the next time of day after the current time of day indicated by the real time clock (33 in FIG. 4). In step 202 the scheduled time (TSCHED) is set equal to that next time of day from the schedule table.

The microcontroller can also be programmed to recall results that have been stored in the random access memory and to indicate whether a calibration or treatment schedule has been followed. This feature could be used, for example, to indicate to a parent or guardian that an appropriate test was not taken at an appropriate time. In the recall mode, after the operator presses the recall button, in step 210 the microcontroller obtains the time of a reading having been stored in the random access memory. Then, in step 211, the microcontroller computes the difference between the recalled time and the scheduled time and determines whether that difference is greater than 15 minutes. If so, then in step 212 the display of the recalled time is flashed and the buzzer is activated for half a second.

To obtain the next scheduled time, in step 213 the microcontroller looks in the schedule table for the next time of day after the recalled time. Then, in step 214 the scheduled time (TSCHED) is set to the next time of day from the table. These steps are repeated for the other readings recalled from the random access memory.

In view of the above, there has been described a portable photoanalytical device that is readily programmed for particular reagent test strips, operators and users, and in which the calibration and performance of the device is documented. Constants for translating reflectance readings into concentration values and control limits for detecting erroneous operation of the device are downloaded from an external computer to a battery-backed RAM chip within the device.

By computing and storing a check sum in the memory, the integrity of the control information is assured. The integrity of the data stored in the RAM is also protected during the insertion and removal of a set of main batteries, and during low-battery conditions prior to battery replacement.

The check sum can indicate whether the device has been initially programmed with control constants and limits. The random access memory can also retain the previously used program number or activity level. This helps to eliminate operator error in entering a proper program number.

To monitor the calibration and performance of the device, there is provided a battery-backed real time clock so that the current date and time can be recorded automatically in the memory when readings are taken. The real time clock could also be used for reminding an operator that a calibration or test reading should be taken according to a schedule stored in the random access memory and also readings that are not taken at the scheduled times can be indicated.

## Claims

1. A portable photoanalytical device for reading reagent test strips, said device comprising:
a random access memory (RAM) chip within said photoanalytical device,
battery means for maintaining information within said RAM chip;
external connector means for downloading information into said random access memory (RAM) chip, said downloaded information providing said device with at least one constant value capable of being used by the device in a software program for translating reflectance readings into concentration values;
switching means for initiating execution of said software program for taking a reflectance reading from a reagent test strip within said device and comparing said reflectance reading to an internal standard and translating the reading to a concentration value using said constant value and storing said concentration value within said RAM chip, the stored concentration value capable of being outputted through said external connector means; and
internal data integrity (IDI) means for determining whether said information maintained within said RAM chip is erroneous and displaying an appropriate message in the event that said information is erroneous.

2. The device of claim 1 including a microprocessor for executing said software program.

3. The device as claimed in claim 2 further comprising a battery-backed real time clock, and wherein said microprocessor is programmed for providing an alarm clock means for alerting an operator to take readings at certain times.

4. The device of claim 2, further comprising low-power serial interface means for connecting said external connector means to said microprocessor.

5. The device of claim 1 wherein said IDI means includes means for summing said information maintained within the RAM chip and comparing the sum to a previously computed sum having been stored in the RAM chip.

6. The device of claim 5 wherein said means for summing and comparing is operative each time the device is turned on.

7. The device of claim 5 wherein the IDI means provides a low battery indication.

8. A method of reading a reagent test strip, said method comprising the steps of:
downloading control information into a portable hand-held photoanalytical device by means of an external connector means whereby said control information is retained within a random access memory (RAM) chip within said photoanalytical device, said control information being maintained within said RAM chip by means of a battery means;
inserting a reagent test strip into said photoanalytical device;
activating a switching means and thereby initiating execution of a software program to use said control information for taking a reflectance reading from the reagent test strip, comparing said reading to an internal standard and converting said reading into a concentration value, said value being stored within said RAM chip, said stored value capable of being outputted through said external connector means; and
monitoring internal data integrity ("IDI") using an IDI means, said IDI means being capable of determining whether said information maintained within said RAM chip is erroneous and displaying an appropriate message in the event that said information is erroneous.

9. The method of claim 8 further including reading a battery-backed real-time clock and operating an alarm to prompt an operator to take readings at predetermined times.

10. A method of operating a portable photoanalytical device for reading a reagent test strip, said photoanalytical device including a random access memory (RAM) within said photoanalytical device, a battery for powering said RAM to maintain information within said RAM, a keyboard for obtaining an activity value for said reagent test strip from an operator, a display for displaying information to said operator, a microprocessor executing a software program including a procedure for taking a reflectance reading from said reagent test strip, comparing said reflectance reading to an internal standard and translating the reading to a concentration value by said procedure using constant values maintained in said RAM and using said activity value, and an external connector through which said constant values are downloaded to said RAM, said method comprising the steps of:

a) executing software instructions with said microprocessor to determine whether said RAM has stored within it said constant values which are not erroneous, and if not, requiring constant values to be downloaded through said external connector,

b) executing software instructions with said microprocessor to display to said user an activity value having been stored in said RAM and permitting said operator to use said keyboard to change said activity value,

c) executing said procedure of said software program to take a reflectance reading from said reagent test strip, compare said reflectance reading to said internal standard and translate the reading to a concentration value by using said constant values maintained in said RAM and said activity value.

**FIG. 1**

CONTROL HIGH NORMAL LOW UNKNOWN ERROR mg/dL
PROGRAM                                      mmol l/l
RECALL        18/8.8              am pm
LOW BAT.                          SECONDS
SYSTEM MONTH HOUR YEAR DAY MINUTE OPERATOR

**FIG. 2**

| CONTROL | CHANGE | FORWARD | REVERSE | CLOCK |
| ON/OFF | PROGRAM | START | | RECALL |

**FIG. 3**

FIG. 4

FIG. 5

FIG. 6

FIG. 7

LOW-POWER SERIAL INTERFACE

FIG. 8

FIG. 9

OPERATING
SEQUENCES ⌐143

PROGRAM
151

READING
152

CONTROL
READING
153

RECALL
154

CLOCK
155

CONTROL
LIMITS
156

FIG. 10

EP 0 387 630 A2

FIG. 11a

B

181 "CONTROL" PRESSED ? — YES → DISPLAY "CCC" IF RAM IS FULL, DISPLAY & ALLOW OPERATOR TO CHANGE OPERATOR NO. & CONTROL TYPE, ENABLE COUNT DOWN READ DARK CURRENT READ REFERENCE, READ SAMPLE, COMPUTE CONCENTRATION, STORE DATE, TIME, OPERATOR NO. & CONCENTRATION — 182 → OFF

NO

183 "RECALL" PRESSED ? — YES → DISPLAY SYSTEM NO., NEW MONTH & STORED READINGS, INDICATE READINGS THAT ARE MISSING OR WERE NOT TAKEN AT APPROPRIATE TIMES IF A TREATMENT SCHEDULE IS STORED IN RAM — 184 → OFF

NO

185 "CLOCK" PRESSED ? — YES → DISPLAY YEAR, MONTH, DAY, HOUR, MINUTE ; GO TO NEXT ONE WHEN "CLOCK" IS PRESSED AGAIN; CHANGE WHEN "CHANGE" IS PRESSED — 186 → OFF

NO

187 PC MODE ? — YES → RECOGNIZE & EXECUTE ANY PC COMMAND IN INPUT BUFFER SUCH AS MANUFACTURING TEST — 188

NO

189 CAL. OR TREATMENT SCHED. ? — YES → EMIT AUDIO ALARM EVERY 15 MINUTES IF TIME EXCEEDS SCHEDULED TIME — 190

NO

C

FIG. 11b

*190*

TIME OF DAY > "TSCHED" ? *191* → YES → MIN.DIF. is=1,15,30 OR 45 ? *192* → YES → TURN ALARM ON *193* → WAIT 1/2 SECOND *194* → TURN ALARM OFF *195*

NO

NO

## FIG. 12

STORE CONC. VALUE TIME, ETC. *200*

↓

LOOK IN SCHEDULE TABLE FOR NEXT TIME OF DAY AFTER CURRENT TIME OF DAY *201*

↓

SET "TSCHED" TO NEXT TIME OF DAY FROM THE TABLE *202*

## FIG. 13

RECALL TIME OF READING & DISPLAY *210*

↓

DIFFERENCE BETWEEN RECALLED TIME & "TSCHED" >15 MIN. ? *211* → YES → BUZZ & FLASH RECALLED TIME *212*

NO

↓

LOOK IN SCHEDULE TABLE FOR NEXT TIME OF DAY AFTER RECALLED TIME *213*

↓

SET "TSCHED" TO NEXT TIME OF DAY FROM THE TABLE *214*

## FIG. 14

APPENDIX I

## SOFTWARE MODULES

```
main()
{
    initialize ports, timers, flags

    if CONTROL and PROGRAM are pressed
        ctrl_limits()

    else if START is pressed
        self test

    else if FORWARD, REVERSE, and PROGRAM are pressed
        start_up()

    program()

    repeat forever

        if PROGRAM was pressed
            program()

        else if START was pressed
            read()

        else if CONTROL was pressed
            ctrl_read()

        else if RECALL was pressed
            recall()
```

MS 1566-EP

```
            else if CLOCK was pressed
                clock()
        }
    }


program()
{
    display program number

    if the meter was just turned on and an out of
range
        control has been run in the current or
previous
        month and has not been rerun within range by
        the same operator flash "error"

    while key pressed not in (CONTROL, CLOCK, RECALL,
        START)

        if key pressed was PROGRAM
            increment program number
            if program number > 8
                    program = 1
        }
    }


rdct_inc

    handle interrupt for timer 1
    increment read counter
}


adc

MS 1566-EP
```

```
            turn on analog voltage
            if this is not a dark read
                wait 16 msec
                turn on bulb
            wait 1 sec
            turn on INT
            wait for COMP to go high, 7 sec timeout
            wait 666 msec
            turn on REF
            start counting
            wait for COMP to go low, 230400 count max
            stop counting
            test dark limits
            store T + T1
        }


    read_sample

        read sample
        store Is
        R = Rfs * (Is-Ios)/(Ifs-Ios)
        if in self test mode
            alternate display until ON/OFF is pressed
        else
            calculate concentration (Equation 3)
        }


    read_dark_ref

        read dark
        store Ios
        read reference
        store Ifs - Ios
```

MS 1566-EP

```
        if in self test mode
            read sample
    }


read

    read dark and reference
    if countdown is enabled
        count down
    read sample
    }


control

    fill display for 1 sec, retain while CONTROL is
        pressed

    if the meter is full
        display "CCC"
    else
        display and allow to change operator number,
        control type

    if this is a system control
        set the program number to 5

    count down
    store reading
    display reading
    flash "error" if reading is out of range
    }


store
```

MS 1566-EP

```
read clock chip
if the month has changed
    new_month
store reading
update control error record
update reading and header data structures
}


recall

display the system number for 1 sec
read clock chip
if the month has changed
    new_month
display the number of free readings
while key pressed no in (CLOCK, CONTROL, PROGRAM,
    START)
    if attempting to go past }
        buzz
    else
        if key pressed was REVERSE
            decrement field
            if done with this reading
                look at previous reading
        else
            increment field
            if done with this reading
                look at next reading


        case (field)
        0:  display " - "
        1:  display concentration
        2:  display operator number
        3:  display time of reading
```

MS 1566-EP

```
                    4:    display date of reading
             }
           wait (to handle acceleration)
         }
       }


    clock

       read clock chip
       display year

       if CHANGE is pressed
           change year

       if CLOCK is pressed
           display month, date

           if CHANGE is pressed
               change month

               if CHANGE is pressed
                   change date

           if CLOCK is pressed
                display hour, minute

               if CHANGE is pressed
                   change hour

                   if CHANGE is pressed
                        change min
       }

    ctrl_limits
```

```
    display system number

    wait until CHANGE or CONTROL is pressed
    if CHANGE was pressed
        change system number

    display units
    wait until CHANGE or CONTROL is pressed
    if CHANGE was pressed
        change units number

    repeat forever
        display the next control limit
        wait until CHANGE or CONTROL is pressed
        if CHANGE was pressed
            change the control limit
    }
}

print_pc                    .

    wait unit a 'C', 'L', or 'P' is received by the
     serial port
    if the character was a 'C' or 'L'
        printer dump

    else repeat until a 'Q' is received
        case (char received)
            'A'
            'C'
            'L':        printer dump
            'M':        manufacturing test
            'R':        set control limits
```

MS 1566-EP

```
                    'r':        output control limits
                    'S':        set system number
                    's':        output system number
                    'T':        set time
                    't':        output time
                    'U':        set units
                    'u':        output units
                }
            }
        reset
    }


print_dump

    read clock chip
    if month has changed
        new_month

    if there are any readings to s}

        for each reading to be output
            if this is the first reading for a new
              header
                put header
            if this is the first reading in its block
                put DLE, STX, block number

            put reading

            if this is the 500th reading to a printer
                end block
                flash unit transfer is re-initiated
                 by  the printer
                re-put the previous header
```

MS 1566-EP

```
            if this is the last reading
                end block

            if 17 readings have been sent in this
              block or there is a new header for the
              next reading
                end block

        }
    else
        send a header and a empty reading block
    reset
}


putc

    put a char
    if the char is a DLE
        put it again
    update checksum
}


blk_end

    put DLE, EOT or ETX, checksum
    if the received character is an ACK
        set pointers for next block
    else
        reset pointers to last block
    }


put_header

    put DLE, SOH, block number, header data
```

MS 1566-EP

```
            put present date
        end block
    }


    put_reading

        put reading data
    }


    mfg

        repeat until a 'Q' is received
            case (char received)
                    'A':        turn on analog voltage
                    'B':        repeat low battery test until
                                 next character
                    'D':        alternate display
                    'I':        initialize meter
                    'K':        keyboard test
                    'M':        memory test
                    'P':        dark and reference test
                    'R':        read test
                    'U':        %R test
                    'S':        set time
                    'T':        output time
                    'W':        crystal test
                    'x':        case (char received)
                        'c': calculate new checksum
                        'g': get data into external memory
                        'p': put data from external memory
                        'x': put header and reading pointers
                        }
                    'Z':        buzzer test
                }
```

<u>MS 1566-EP</u>

```
        }
    }

    scan

        enable reset
        set key matrix column A low, B & C high
        scan key matrix inputs

        set column B low, A & C high
        scan key matrix inputs

        set column C low, A & B high
        scan key matrix inputs

        disable reset
    }

    key_released

        wait until no key is pressed for at least 20 msec
    }

    disout

        clock out 48 bits from disbuf to the display
driver
    }

    cirdsp

        clear display (except for "lowbat")
    }
```

MS 1566-EP

```
err

    display "Err"
    reset
}

bars

    display "---"
}

dis

    if the number <2000
        display it
    else
        display 'Err'
}

dis_reading

    display the units
    if the concentration is low
        display "LO"
    else if it is high
        display "HI"
    else
        display the concentration
}

dis_ctrl_mode

    display the control type
}
```

MS 1566-EP

flash_err

    flash "error" until the desired key is pressed
}

ticktimer

    set up timer 0 as an 8 bit auto-reload timer,
        interrupting every 1 msec
    set up timer 1 as a baud rate generator for 9600
baud
}

millisec

    handle timer 0 interrupt
    update msec and sec counts
    time out after 180 sec with no key pressed
}

wait

    wait for a given number of msec
}

getchar

    wait for a character to be received by the UART
    return the character
}

outchar

MS 1566-EP

```
        transmit a character out the UART
    }

get

    receive an integer in ASCII

    return the integer
    }

put

    transmit an integer in ASCII
    }

putin

    transmit an integer in ASCII
    transmit a (CR) (LF)
    }

prv

    return an index to the previous reading
    }

nxt

    return an index to the next reading
    }

loadptr

    load the external memory data pointer
```

MS 1566-EP

```
}

bulbtest

    turn on analog voltage
    wait 16 msec
    turn on bulb
    wait 2 sec
    set low battery flag
}

new_checksum

    calculate a new checksum for the portion of
external memory
    containing reading data
    if just turned on
        perform a low battery test
}

new_header

    if no control readings have been taken since the
last header
        rewrite current header
    else
        create new header
}

new_month

    delete previous month's headers
    update pointers so that the current month becomes
the previous
```

MS 1566-EP

```
        month
      create a new header
      update control error record
    }

time

      send access code to clock chip
      if reading time
          read time from clock chip
      else
          write time to clock chip
    }

recog
      send access code to clock chip
    }

change

      repeat until a terminating key is pressed
          if b
              display
          else
              clear
      wait until FORWARD, REVERSE or terminating key
pressed,
          300 msec max
      repeat while FORWARD or REVERSE is pressed
              increment or decrement parameter
              display parameter
              if changing time
                  update clock chip
              if changing units or a control limit
```

MS 1566-EP

```
                        if changing units
                              convert control limits
                        make new header
                  wait (to handle acceleration)
                b = not b
            }
        }


        change_dis


            if changing the hour
                set am or pm
            if changing the month or hour
                if changing the hour and the hour ) 12
                        display hour-12, minute
                else if changing the hour and the hour is 0
                        display 12, minute
                else
                        if changing the units
                                display units
                        else
                                if changing a control limit and
        units = mmol
                                        set decimal point
                                display other, n
        }


        initialized


            return true if the initialized code is written in
        external
            memory
        }



        MS 1566-EP
```

```
start_up

    fill display
    initialize variables
    wait for CHANGE to be pressed
    change system number
    wait for PROGRAM to be pressed twice
    write initialized code to external memory


    Constants
        Rfs     0.907
        G0      0
        G1      1.0
        A       278.5
        B       -695
        C       465
        D0      37701
        D1      -68202
        E0      .35
        E1      0.01
```

MS 1566-EP